# EUROPEAN PATENT APPLICATION

(11) **EP 1 348 931 A2**
(43) Date of publication of application: **01.10.2003**
(21) Application number: 02380244.0
(22) Date of filing: 28.11.2002
(51) Int. Cl.: G01B 11/00

(54) **Rolling and lathing parameter measuring device by artificial viewing for railway vehicles wheels**

(30) Priority: 25.02.2002 ES 200200450
(71) Applicant: PATENTES TALGO, S.A., 28230 Las Rozas (Madrid) (ES)
(72) Inventor: Sanchez Revuelta, Angel Luis, 28230 Las Rozas, Madrid (ES); Navarro Belsue, Rafael, 28230 Las Rozas, Madrid (ES); Gomez Gomez, Carlos Javier, 28230 Las Rozas, Madrid (ES)
(74) Representative: Elzaburu, Alberto de

(57) **Abstract**

A measuring device for the rolling and lathing parameters of railway wheels (1) permitting the viewing of both sides of the flange and the rolling band by means of artificial viewing methods, using two laser light sources (2), each one of which projects a line of light along the profile to be measured. A camera (4) simultaneously captures both sides of the illuminated profile (3) with the aid of a two mirror periscope system (5). The periscope design permits simultaneous viewing of both the flange and the rolling band with a single camera. A set of wheel presence sensors (10) activates image capture by the camera. Each captured image is sent to an electronic artificial viewing equipment (6), where the two profile views containing the recorded image are composed resulting in a complete profile. The obtained results are displayed in the electronic equipment itself or in a computer (7).

## Description

### FIELD OF THE INVENTION

The present invention generally refers to the exact measurement of rolling and lathing parameters in railway wheels, using optical and artificial viewing techniques to obtain a numeric description of the wheel profile over both sides. More specifically, the invention refers to a device that may be assembled on any type of track where vehicles circulate, in which case the device would only measure the rolling parameters, or assembled over a pit lathe or machine for machining profiles like auxiliary devices, peripheral to the same, where the device measures both the rolling and lathing parameters. Generally speaking, the device may be used to measure complete profiles of objects with two sides or pronounced curves (like coins, wheels, etc.) requiring two different simultaneous views.

### BACKGROUND OF THE INVENTION

Artificial viewing systems are already known to obtain reproductions of railway wheel profiles by means of devices situated on the track.

An example of prior state-of-the-art is shown in document ES A-2 122 876, referring to "Installation and Measuring Procedure of Rolling Parameters by Artificial Viewing in Railway Vehicle Wheels", dated June 29^{th} 1995, which does not consider the viewing of a complete profile.

Likewise, the prior art has already considered the measurement of rolling and lathing parameters over pit lathes, but always being based on mechanical contacts. However, the use of artificial viewing on lathes to measure lathing and rolling parameters is unknown.

### SUMMARY OF THE INVENTION

The invention basically consists of projecting a laser beam over the wheel to be measured. Said beam illuminates a fine line along the flange and rolling band, covering each side of the profile. The luminous profile images generated are captured by a camera with the aid of a two mirror periscope, conveniently located to permit viewing of the complete profile, obtaining images for each moment, containing two superimposed views corresponding to both sides of the profile. A set of wheel presence sensors activates image capture in the camera. Said camera transmits the captured images to an artificial viewing system which records, digitalises, analyses and calculates the rolling and lathing parameters, if relevant. Viewing of the results may be performed in the artificial viewing system itself or in a computer. In turn, these results may be transmitted to other devices or numeric control in the case of a device over a pit lathe.

More specifically, the invention provides a measuring device for the rolling parameters for flange thickness and height, qR factor, wheel diameter, distance between inner sides, gradient in the rolling circle, warping and ovalisation and lathing parameters of offsetting on both axles of railway wheels. For this purpose, it uses optical methods and those of artificial viewing, characterised by the use of two or more laser light sources illuminating a line along the flange profile and the rolling band of the wheel to be measured; a video camera simultaneously capturing two views of the illuminated area which, on appearing in different zones of the image prevents overlapping; a set of sensors activating image capture in the camera; two mirrors helping the camera to view the complete profile in a single image and an artificial viewing system which, on being connected to a video camera and integrating the two parts of the image, records, digitalises, analyses and calculates the measurement parameters, as well as memorising the obtained images.

The device of the invention uses suitable mathematical algorithms to compensate potential optical defects, as well as differences of perspective and magnifications of the two views, such that profile extraction is obtained with a high resolution.

According to the invention, the device uses two mirrors permitting the complete profile to be viewed with a single camera, on both sides of the flange. Alternatively, the mirror nearest to the camera may be replaced by a semi-mirrored sheet. The sheet has the advantage that it may be placed directly in front of the camera.

According to another aspect of the invention, the artificial viewing system is designed to process at least 24 image pairs per wheel.

According to yet another aspect of the invention, the device may be installed on a railway track using, besides the components described above, a special rail along which the outer part of the wheel to be measured is made to circulate; a counter-rail which centres said wheel and a wheel sensor indicating the presence of the wheel to the device. In this arrangement, the system could measure a moving train, circulating at a certain speed over the facility.

According to another aspect of the invention, the device may be installed in a pit lathe using besides the components described above, a pit lathe with its traction rollers over which the wheel to be measured rotates. In this case and preferably, the wheels rotate over the traction rollers at a known and programmable speed. As an alternative, measurements may be carried out with the wheels resting over the traction rollers, without rotating.

It is preferable that all the components corresponding to one of the wheels to be measured are repeated for the opposite wheel, except for the artificial viewing system which is common.

Likewise, the artificial viewing system may be communicated with a computer, the numeric control of the pit lathe or any other device with which it exchanges data.

As an alternative, the fact of using a greater number of cameras, lasers and/or mirrors is contemplated.

### BRIEF DESCRIPTION OF THE DRAWINGS

The invention is illustrated in detail in the following drawings, where:
Figure 1 shows the general arrangement of the device as a whole, consisting of two laser beams which incide over all the wheel profile to be measured, a camera together with the optional optics, consisting of two mirrors permitting the viewing of the complete profile with a single camera, an artificial viewing system and optionally a computer. This figure is broken down in two parts, in which the right part offers a view of the wheel taken along its rolling band, while the left part is a view of the wheel taken along one of its sides.
Figure 2 shows the previous device applied to a track. This Figure has also been broken down into two parts, equal to the figure above.
Figure 3 shows the device of figure 1 applied to a pit lathe.
Figure 4 schematically shows how the images obtained by the device look like in both applications and the composition of each one in the artificial viewing system.

### DETAILED DESCRIPTION OF THE INVENTION

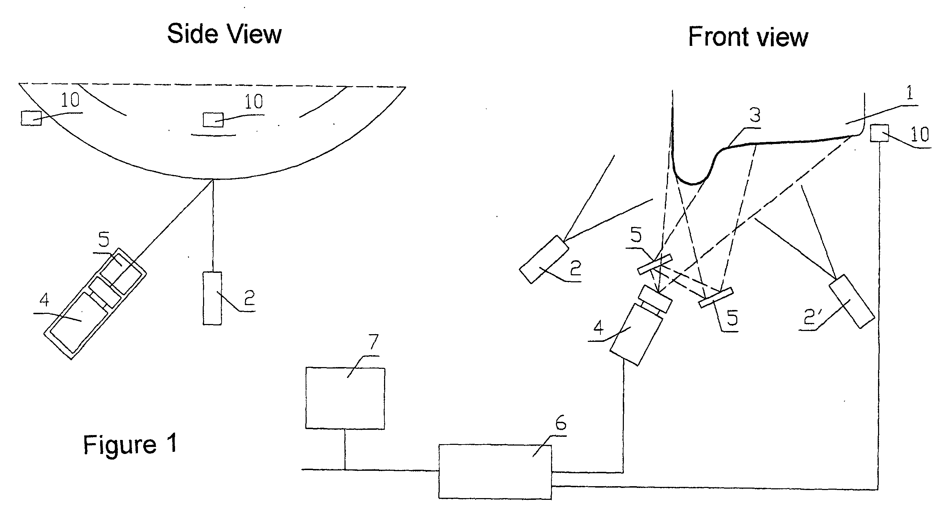

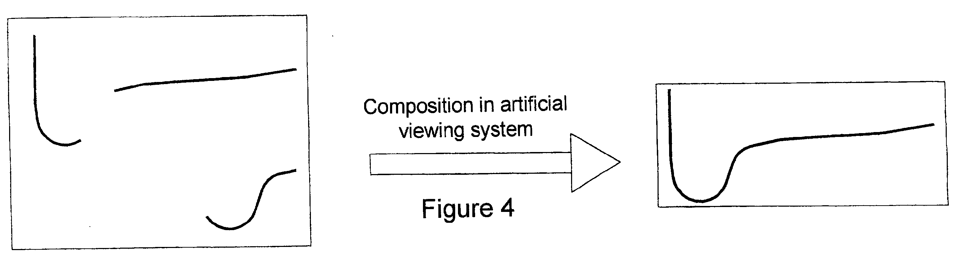

Firstly referring to Figure 1, a wheel (1) may be seen and two linear laser beams (2, 2') projecting a fine line of light which illuminates the wheel profile. The illuminated profile (3) is captured by a camera (4) in the form of two simultaneous views (according to figure 4) combined in the image. One of the views is that directly obtained from the camera vision angle and the second one is obtained by means of a two mirror periscope (5), permitting the viewing of both the flange and rolling band simultaneously. A set of sensors (10), activates image capture in the camera. Each captured image, including the two views, is sent to electronic artificial viewing equipment (6), where both views are composed to reproduce the complete profile (See figure 4). In this equipment, once the images have been recorded, digitalised and analysed, the rolling and lathing parameters are calculated. The obtained results may be viewed and stored in the own electronic equipment or transmitted to a computer (7) or to the numeric control of a lathe. The system is double, simultaneously making measurements on one wheel and the opposite one.

Except the artificial viewing system (6) and if relevant, the computer (7) common to both sides, the other device components are repeated for the opposite wheel with specular symmetry.

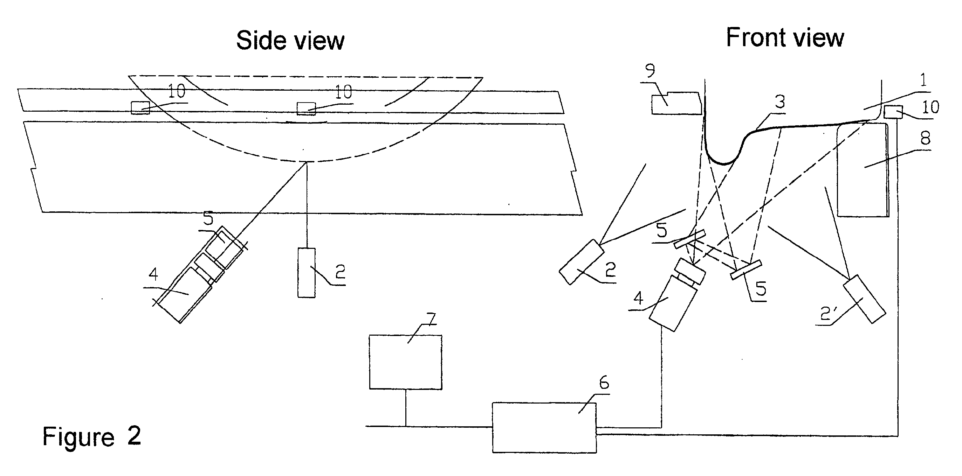

Figure 2 shows the device illustrated in figure 1, applied to the rail, where a wheel (1) to be measured is seen circulating at a manoeuvre speed along a rolling rail (8) especially designed to the rolling zone to be analysed free, performing centring by means of a counter-rail (9). On one side of the rail, there is a set of wheel position sensors (10) detecting the presence of a wheel, sending an activation signal to the system, consisting of two linear laser beams (2, 2') which project a fine line of light, illuminating the wheel profile. The illuminated profile (3) is captured by a camera (4) in the form of two simultaneous views (according to figure 4) combined in the image. One of the views is that directly obtained from the viewing angle of the camera and the second one is obtained by means of a two mirror periscope (5), permitting both the flange and rolling band to be simultaneously viewed. Each captured image, including the two views, is sent to an electronic artificial viewing equipment (6) where both views are composed to reproduce the complete profile (See figure 4). In this equipment, once the images have been recorded, digitalised and analysed, the rolling and lathing parameters are calculated. The obtained results may be viewed and stored in the electronic equipment itself or transmitted to a computer (7) or the numeric control of a lathe. The system is double, simultaneously performing measurements on one wheel and the opposite one.

Except the artificial viewing system (6) and if relevant the computer (7) common for both sides, the other device components are repeated for the opposite wheel with specular symmetry.

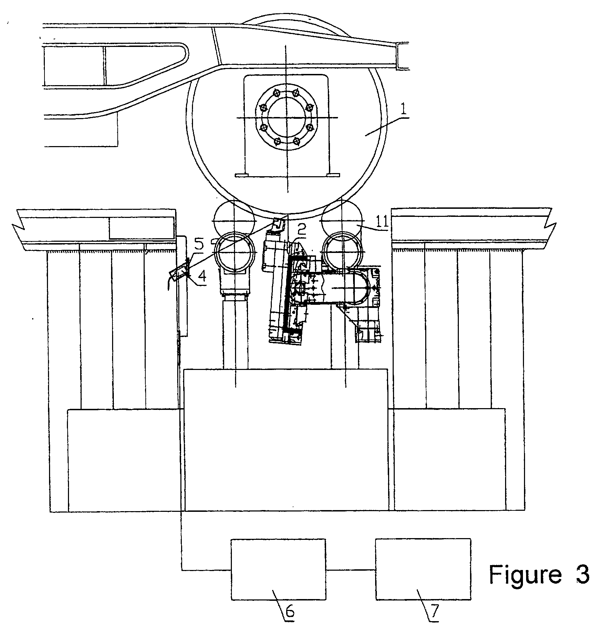

Figure 3 shows the device illustrated in Figure 1 applied to a pit lathe, where a wheel (1) to be measured is observed rotating at a determined speed over the traction rollers (11) of the pit lathe. The numeric control of the lathe activates the commencement of measuring. The illumination system (2) and recording system are similar to those of Figure 1. The artificial viewing system (6) performs digitalisation, profile composition, analysis and calculation of the measurement parameters, as well as the storing of images and final data transmission to numeric control. Likewise, the artificial viewing system sends the results to a computer (7), conveniently classifying the measurements in a database and preparing the lathing report. The obtained profile is stored so that it may be compared with other standard profiles and even with previously measured and stored profiles of the same wheel. By means of these profiles, it is possible to measure the described parameters, as well as performing any other type of measurement. In this sense, the analysis and data comparison module may optionally incorporate viewing software of the three dimensional reconstruction of the wheel (or details of appropriate areas by means of digital zoom) and/or the deformations regarding the theoretical shape or a previous measurement.

The measurement process is performed before and after wheel lathing. If after measurement it is necessary to machine again, the part references would be stored in the computer, allowing the measuring process to be applied not only to the beginning and end of machining but also to any intermediate machining.

Figure 4 schematically shows the type of images obtained by the camera, as well as the image composition performed by the artificial viewing system to generate an image reproducing the complete profile.

The measurements obtained from said reproductions are for both system variants (Figures 2 and 3), the rolling parameters for flange thickness, flange height, qR factor or flange angle, distances between inner sides and active sides of opposite wheels, wheel diameter, ovalisation measurement, warping measurement, gradient on the rolling circle and reproduction of profile and three dimensional shape. For the variant shown in Figure 3, the offset lathing parameters are also obtained on the vertical X axis and the horizontal Z axis. The point for diameter measurement may be configured according to its distance to the internal wheel sides.

Although the above gathers the essential features for the present invention, it will be understood that the latter may vary and be modified as occurring to experts in the matter. For this reason, it is intended that the scope of the invention is only limited by the contents of the following claims.

## Claims

1. A precision measuring device for the rolling parameters of flange thickness and height, qR factor, wheel diameter, distance between internal sides, gradient on the rolling circle, warping, ovalisation, three dimensional shape and offset lathing parameters on both axles, for railway wheels, using artificial viewing, **characterised in that** it comprises two laser light sources (2, 2') illuminating a line along the profile and rolling band of the wheel (1) to be measured; a video camera (4) which captures two simultaneous views of the illuminated zone (3) in each image captured in the camera; a set of sensors (10) actuating image capture in the camera; a periscope consisting of two mirrors (5), one of which may be a semi-mirrored sheet and providing the second view to obtain the complete profile; and an artificial viewing system (6) which, connected to the video camera (4), records, digitalises, composes both profile views, analyses and calculates the measurement parameters, as well as stores the obtained images.

2. A device according to claim 1, **characterised in that** it uses suitable mathematical algorithms including compensation of potential optical defects, composition of both profile views, so that the profile with a precision greater than that corresponding to the normal pixel size, the reconstruction of the three dimensional shape and the viewing (complete or of details) of the wheel and the analysis of relevant parameters are carried out.

3. A device according to the previous claims, **characterised in that** the periscope system used in the form described and consisting of two mirrors or one mirror and a semi-mirrored sheet or formed by another pair of optic components with similar functions, permits both sides of the profile to be viewed with a single camera, this device being applicable both to wheels or any other component requiring two views for its complete viewing.

4. A device according to the previous claims, **characterised in that** the artificial viewing system (6) is designed to process at least 24 image pairs per wheel.

5. A device according to the previous claims, **characterised** on being applied to a railway track and **in that**, beside the components described in claim 1, comprises a special rail (8) along which the external part of the wheel to be measured is made to roll; a counter-rail (9) which centres said wheel and a set of wheel sensors (10) informing the device of the presence of a wheel.

6. A device according to claims 1 to 3, **characterised by** being applied in a pit lathe and also in that, beside the components described in claim 1, it comprises a pit lathe with its traction rollers (11) over which the wheel to be measured rotates.

7. A device according to claim 6, **characterised in that** the wheels (1) rotate over the traction rollers (11) at a known and programmable speed.

8. A device according to claim 7, **characterised in that** measurements are performed with the wheels (1) resting over the traction rollers (11) without the latter rotating.

9. A device according to the previous claims, **characterised in that** all its components corresponding to one of the wheels to be measured, repeat for the opposite wheel with specular symmetry, except for the artificial viewing system, which is common.

10. A device according to previous claims, **characterised in that** the artificial viewing system (6) is linked with a computer (7) and/or with the numeric control of the pit lathe with which it performs data exchange.

11. A device according to previous claims, **characterised by** the use of a greater number of cameras, lasers and/or periscopes.
